# EUROPEAN PATENT SPECIFICATION

(11) **EP 3 248 737 B1**
(45) Date of publication and mention of the grant of the patent: **26.12.2018**
(21) Application number: 16170851.6
(22) Date of filing: 23.05.2016
(51) Int. Cl.: B25J 15/00, B25J 15/08, B25J 15/02

(54) **SATELLITES GRIPPER**
SATELLITENGREIFER
PINCE DE SATELLITES

(43) Date of publication of application: 29.11.2017
(73) Proprietor: Przemyslowy Instytut Automatyki i Pomiarów PIAP, 02-486 Warszawa (PL)
(72) Inventor: DUDEK, Lukasz, 01-318 Warszawa (PL)

(56) References cited:
- EP-A1- 2 332 698
- US-A1- 2014 265 401
- US-B1- 6 505 870

## Description

The invention consists of a gripper intended for gripping satellites in space.

A problem often occurring when intercepting a satellite which requires servicing in the absence of gravity, with the use of a servicing satellite's gripper, is the simultaneous rotation of the captured satellite relative to the gripper in three axes. This prevents the full synchronization of the gripper with the satellite element by which it can be safely gripped. The element in question can be an launch adapter connecting the satellite with the launch vehicle which is characterised with a high level of rigidity and it is not covered by thermal insulation. The mentioned above lack of full synchronization means that with every attempt to grip the satellite there will be errors of the position and orientation of the gripper relative to the adapter. This problem has been addressed in different ways.
The US6840481 publication introduced a multi-spot docking system equipped with two mechanical grippers able to grip launch adapters of different satellites during rescue, service and deorbiting missions. Each of these grippers is mounted to a mobile platform with one degree of freedom moved by means of a screw mechanism. The US 2013/0249229 publication discloses a satellite intercepting device that allows to quickly grip an object by releasing a preloaded spring which pinches three specially profiled fingers of the gripper. Two of these fingers are located on one side of the device, and the third being opposable. After the initial tightening of the gripper induced by the release the spring, the finger clamping force is increased by the means of a screw mechanism.
A similar gripper mechanism is disclosed in US 2015/314893 publication, and in this solution, instead of a three-finger gripper two separate two-finger grippers are used with an additional mechanism that allows adjustment of the orientation of the grippers towards the position of the object to be gripped.
From the US4718709 publication we know an electrically powered two-finger gripper with a specially shaped fingers adapted for gripping oval objects. The shape of these fingers allows the initial grip of the object, its arrangement in the gripper and clamping on the object.
The PCT/CA2005/000718 publication discloses a mechanism adapted to grip the satellite by the nozzle of thrusters. The gripping mechanism is equipped with fingers, each consisting of two phalanges activated with one rod. The operation of the rod after the introduction of the gripper fingers to the nozzle thrusters causes the opening of these fingers, and consequently locking the gripper inside the nozzle.
Further gripper mechanisms are disclosed in US6505870B1, EP2332698A1 and US2014265401 A1.

The objective of the invention was to develop a construction of a gripper which could be capable of gripping the satellite adapter even with large position and orientation errors of the gripper relative to the adapter.
This objective is realized by a gripper consisting of a base to which at least one movable finger is mounted, consisting of at least two joint-hinged phalanges and activated mechanically with one linear drive link. The invention consists in the fact that the movable finger of the gripper consists of at least one distal phalanx and one proximal phalanx. The distal phalanx is hinged to the first segment of the proximal phalanx using a shorter and longer guiding segment. Both of these guiding segments are parallel to each other and with the two phalanges form a movable parallelogram, wherein the free end of the longer guiding segment extends beyond the proximal phalanx. Between the proximal phalanx and the shorter guiding segment there is an element for increasing torque required for turning this segment relative to the proximal phalanx. At the other end of the proximal phalanx there is a pivotally mounted first end of the first drive segment. In the middle of the proximal phalanx there is a pivotally mounted first end of the second drive segment. The second end of the first drive segment is connected pivotally to the middle part of the second drive segment via the first rod, while the second end of the second drive segment is pivotally connected to the free end of the longer guiding segment with the second rod.
In one of embodiments of the invention the length of the distal phalanx is less than the length of the proximal phalanx, which is equipped in its middle part with a catching lug.
In another embodiment of the invention the element increasing torque required to turn the shorter guiding segment relative to the proximal phalanx is a spring.
In another embodimnt of the invention, opposite to the movable finger, a resistive finger element is mounted to the base.
In another embodiment of the invention the linear drive link of the movable finger forms a third rod pivotally connected with its first end to the middle part of the first drive segment, while the other end of this rod is connected to the linear actuator.
In another embodiment of the invention the linear actuator is a lead screw with a nut, which is mounted to the second end of the third rod.
In another embodiment of the invention the gripper comprises of two movable fingers, and the resistive finger element is located opposite both the fingers and is hinged to the base and it is activated by a linear actuator.
In yet another embodiment of the invention the linear actuators of the two movable fingers and the finger resistive element are lead screws with nuts, wherein each of the lead screws is equipped with a gear wheel working in tandem with a separate gear wheel of the axle differential mechanism driven by an electric motor.
The invention simplifies the interception of a satellite as it does not require the accurate initial positioning and yet it leads the gripper to clamp on the adapter in the planned position.

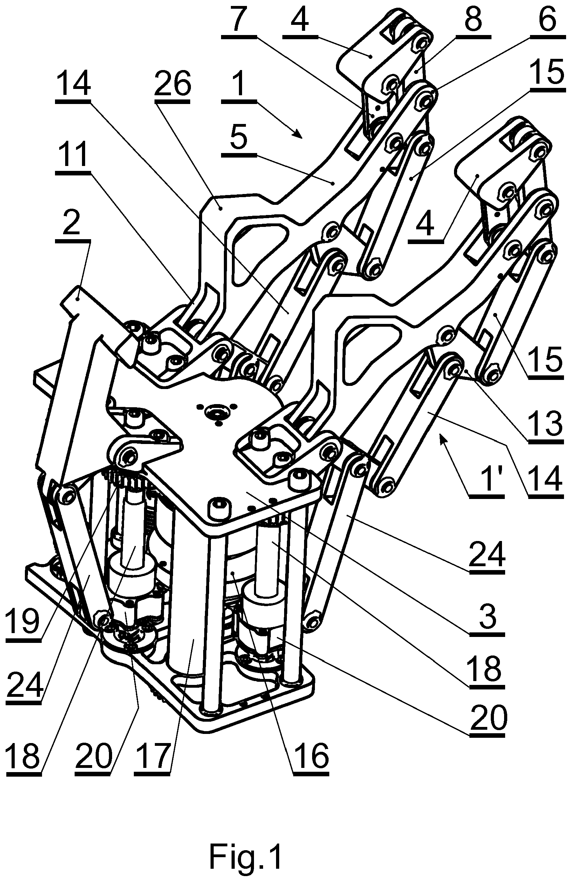

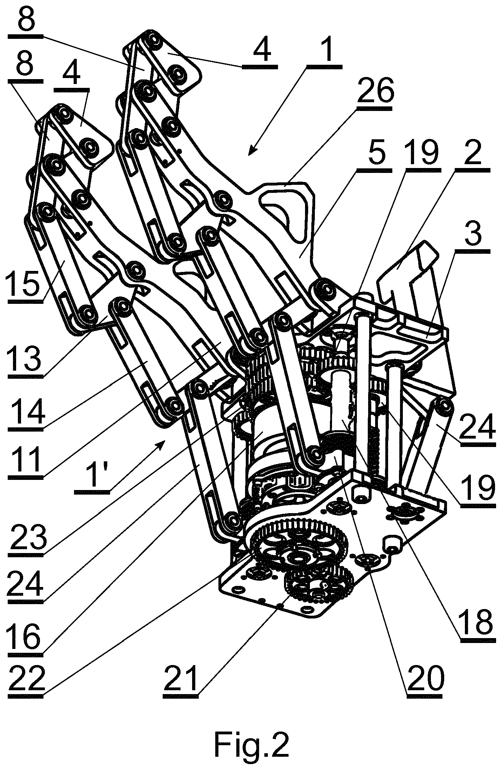

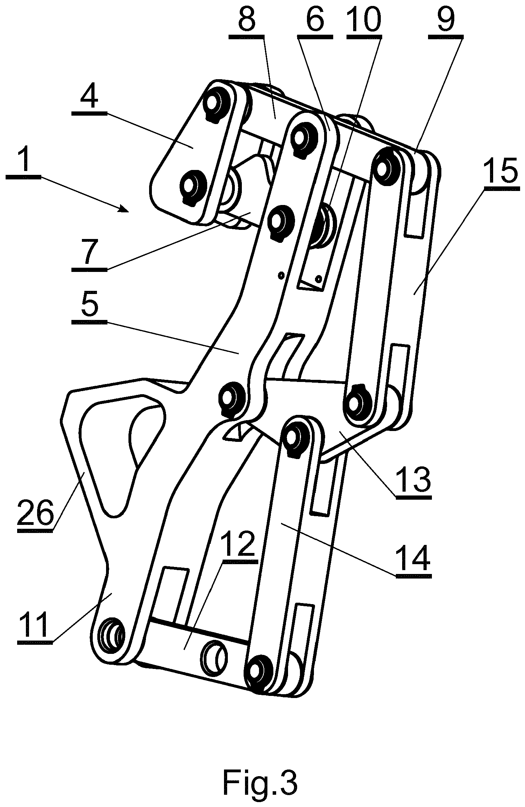

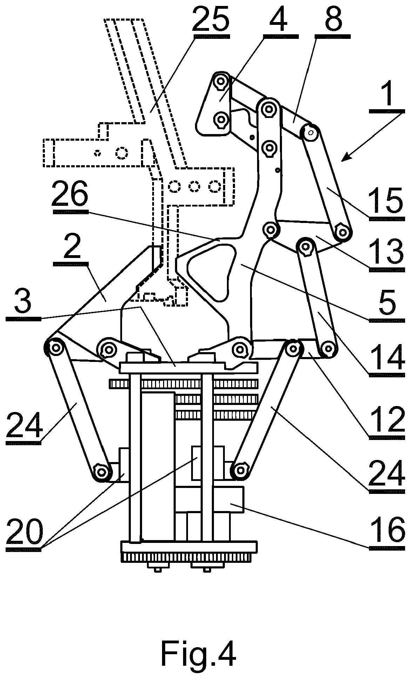

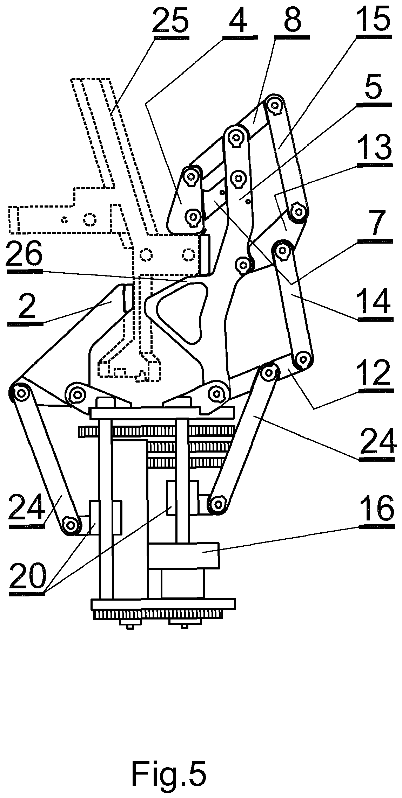

An example of the subject of the invention is described below in detail and illustrated in the drawing, where Fig.1 and Fig.2 show the gripper in two perspective views, and Fig.3 shows a perspective view of the movable finger of the gripper. Fig.4 shows a side view of the gripper when gripping the satellite adapter, and Fig.5 shows in the same view of the gripper correctly clamped on the adapter.

An exemplary gripper in accordance with the invention comprises two movable fingers 1 and 1' and one opposable movable resistive finger segment 2 mounted pivotally to the base 3 of the gripper. Each of the movable fingers 1 and 1' consists of a distal phalanx 4 and of the proximal phalanx 5. The distal phalanx 4 is hinged to the first segment 6 of the proximal phalanx 5 using a shorter guiding segment 7 and a longer guiding segment 8. Segments 7 and 8 are mutually parallel and form with the phalanges 4 and 5 a movable parallelogram. The free end 9 of the longer guiding segment 8 extends beyond the proximal phalanx 5. On the axis of rotation of the guiding segment 7 relative to the phalanx 5 there is a spring 10 increasing the torque required to move the segment 7 relative to the phalanx 5. At the other end 11 of the phalanx 5 there is a pivotally mounted first end of the first drive segment 12. In the middle of the phalanx 5 there is a pivotally mounted first end of the second drive segment 13. The second end of the first drive segment 12 is connected pivotally to the middle part of the second drive segment 13 via the first rod 14. The second end of the second drive segment 13 is connected pivotally to the free end 9 of the longer guiding segment 8 via the second rod 15. On the opposite side, relative to fingers 1 and 1' and the resistive element 2, of the base 3, there is a drive system of the gripper. It consists of three linear actuators, axle differential mechanism 16 and an electric motor 17. Each linear actuator is a lead screw 18 with a gear wheel 19 and a nut 20 sliding along the axis if the lead screw 18 when the latter rotates. On the output shaft of the motor 17 there is a gear wheel 21 transferring with the gear wheel 22 the drive torque to the input shaft of the differential mechanism 16. On coaxial output shafts of the differential mechanism 16 there are gear wheels 23 working with gear wheels 19 of the lead screws 18. To two nuts 20 there are pivotally mounted first ends of three rods 24, whose other ends are mounted pivotally to the middle part of the first drive segment 12. In an analogous manner the resistive member 2 is coupled with the linear actuator. The linear movement of nuts 20 along the lead screws 18 causes the movement of fingers 1 and 1' and the resistive member 2. When the adapter 25 of the intercepted satellite is within the reach of the gripper, the gripper drive is started. In the middle part of the phalanx 5 there is in the gripping lug 26 adapted to the cross-section of the adapter 25. The linear movement of the nuts 20 causes the 1 and 1' fingers and the resistive segment 2 move closer to the adapter 25. The gripping movement of the phalanx 4 is prevented by the spring 10 until the segment 2 and the phalanx 5 properly clamp against the adapter 25. The design of the differential mechanism 16 provides transmission to the wheels 23 of the torque only to some of its value, which causes a selective turning off of the drive when the specified gripping element reaches its final position. In the described example the finger components, their drives and the resistive segment are made of aluminium. Phalanx 4 is shorter than phalanx 5, and their lengths are adapted to the shape of the adapter 25 which is to be gripped. The described gripper has movable fingers consisting of only two phalanges, but if necessary there may be more; however, only the distal phalanx is connected to the proximal phalanx with the parallelogram mechanism, while the previous phalanges are linked together by a one-axle hinge.

## Claims

1. A satellites gripper comprising a base (3) to which at least one movable finger (1) is hinge-mounted consisting of at least two phalanges (4, 5) hinged to each other, and activated mechanically by one linear drive link (24), wherein the movable finger (1) comprises at least a distal phalanx (4) and proximal phalanx (5), the distal phalanx (4) is hinged to the first end (6) of the proximal phalanx (5) with a shorter (7) and a longer (8) guiding segment, both of the guiding segments (7, 8) are mutually parallel and form with two phalanges (4, 5) a movable parallelogram, wherein the free end (9) of the longer guiding segment (8) extends beyond the proximal phalanx (5), between the proximal phalanx (5) and the shorter guiding segment (7) there is an element (10) increasing the torque required for turning the segment (7) relative to the proximal phalanx (5), at the second end (11) of the proximal phalanx (5) there is the first end of the first drive segment (12) mounted, in the middle part of the proximal phalanx (5) there is the first end of the second drive segment (13) hinged, the second end of the first drive segment (12) is connected pivotally to the middle part of the second drive segment (13) via the first rod (14), and the second end of the second drive segment (13) is connected pivotally to the free end (9) of the longer guiding segment (8) via the second rod (15).

2. The gripper according to Claim 1, **characterized by that** the length of the distal phalanx (4) is less than the length of the proximal phalanx (5), which in its middle part is equipped with a catching lug (26).

3. The gripper according to Claim 1 or 2, **characterized by that** the element increasing the torque required to turn the shorter guiding segment (7) relative to the proximal phalanx (5) is a spring (10).

4. The gripper according to one of Claims from 1 to 3, **characterized by that** opposite the movable finger (1) to the base (3) a finger resistive element (2) is mounted.

5. The gripper according to one of Claims from 1 to 4, **characterized by that** the linear drive link of the movable finger (1) forms a third rod (24) pivotally connected with its first end to the middle part of the first drive segment (12), the other end of this rod (24) is connected to the linear actuator (18, 20).

6. The gripper according to Claim 4, **characterized by that** the linear actuator is a lead screw (18) with a nut (20), to which is mounted the second end of the third rod (24).

7. The gripper according to Claims 5 or 4, **characterized by that** the gripper comprises of two movable fingers (1, 1'), while the resistive finger element (2) is located opposite both the fingers (1, 1') and is hinged to the base (3) and it is activated by a linear actuator (18, 20).

8. The gripper according to Claim 7, **characterized by that** the linear actuators of the two movable fingers (1, 1') and the finger resistive element (2) are lead screws (18) with nuts (20), wherein each of the lead screws (18) is equipped with a gear wheel (19) working in tandem with a separate gear wheel (23) of the axle differential mechanism (16) driven by an electric motor (17).

## Patentansprüche

1. Statellitengreifer bestehend aus einem Ständer (3), an dem mindestens ein beweglicher Finger (1) angelenkt ist, der aus mindestens zwei Fingerglieder (4, 5) besteht, die miteinander angelenkt sind und mittels einer Linearantriebseinheit (24) mechanisch betätigt werden, **wobei** der bewegliche Finger (1) aus mindestens einem Endglied (4) und einem Grundglied (6) besteht, und das Endglied (4) ist mit der ersten Endung (6) des Grundgliedes (5) über das kürzere (7) und längere (8) Führungssegment angelenkt, und die beiden Führungssegmente (7, 8) sind parallel zueinander und bilden zusammen mit den beiden Glieder (4, 5) ein bewegliches Parallelogramm, wobei die freie Spitze (9) des längeren Führungssegments (8) über das Grundglied (5) hinausragt, und zwischen dem Grundglied (5) und dem kürzeren Führungssegment (7) ein Element (10) vorhanden ist, das das notwendige Drehmoment zum Drehen des Segments (7) gegenüber dem Grundglied (5) erhöht, und die erste Spitze des zweiten Antriebssegments (12) an der anderen Spitze (11) des benachbarten Grundgliedes (5) montiert ist und der mittlere Teil des Grundgliedes (5) die gelenkige erste Spitze des zweiten Antriebssegments (13) enthält, und die andere Spitze des ersten Antriebssegments (12) durch die erste Stange (14) an die Mitte des zweiten Antriebssegments (13) angeheftet ist, und die andere Spitze des zweiten Antriebssegments (13) über die zweite Stange (15) an die freie Spitze (9) des längeren Führungssegments (8) angeheftet ist.

2. Greifer nach Anspruch 1, **dadurch gekennzeichnet, dass** die Länge des nach vorne gerichteten Endgliedes (4) kürzer ist als die Länge des nach vorne gerichteten Endgliedes (5), das in seinem zentralen Teil mit einem Greifhaken (26) ausgestattet ist.

3. Greifer nach Anspruch 1 oder 2, **dadurch gekennzeichnet, dass** das für die Drehung des kürzeren Führungssegments (7) in Bezug auf das Grundglied (5) erforderliche Drehmoment erhöhende Element eine Feder (10) ist.

4. Greifer, nach einem der Ansprüche 1 bis 3, **dadurch gekennzeichnet, dass** auf der gegenüberliegenden Seite des beweglichen Fingers (1) ein dem Finger (2) widerstehendes Element am Ständer (3) befestigt ist.

5. Greifer, nach einem der Ansprüche 1 bis 4, **dadurch gekennzeichnet, dass** die Linearantriebseinheit des beweglichen Fingers (1) eine dritte Stange (24) bildet, die mit ihrer ersten Spitze an den Mittelteil des ersten Antriebssegments (12) angelenkt ist, und die andere Spitze dieser Stange (24) mit dem Linearantrieb (18, 20) verbunden ist.

6. Greifer, nach Anspruch 4, **dadurch gekennzeichnet, dass** der Linearantrieb eine Zugstange (18) mit Mutter (20) ist, an der die andere Spitze der dritten Stange (24) befestigt ist.

7. Greifer, nach Anspruch 5 oder 4, **dadurch gekennzeichnet, dass** der Greifer aus zwei beweglichen Fingern (1, 1') besteht, wobei das widerstandsfähige Fingerelement (2) auf der gegenüberliegenden Seite beider Finger (1, 1') platziert, an dem Ständer (3) angelenkt und durch ein Linearstellglied (18, 20) betätigt wird.

8. Greifer, nach Anspruch 7, **dadurch gekennzeichnet, dass** die Linearantriebe der beiden beweglichen Finger (1, 1') und das widerstandsfähige Fingerelement (2) Zugschrauben (18) mit Muttern (20) sind, beide Zugschrauben (18) sind mit einem Zahnrad (19) ausgestattet, das mit einem separaten Zahnrad (23) des axialen Differentialmechanismus (16) arbeitet, das von einem Elektromotor (17) angetrieben wird.

## Revendications

1. Un grappin satellite se compose d'une base (3) à laquelle est fixé à charnières au moins un doigt mobile (1) se composant d'au moins deux phalanges (4, 5) liées l'une à l'autre à charnières et mises en marche mécaniquement au moyen d'une unité à transmission linéaire (24) **dans lequel** le doigt mobile (1) se compose d'au moins une phalange plus éloignée (4) et d'une phalange plus proche (6) et la phalange plus éloignée (4) est liée à charnières au premier bout (6) de la phalange plus proche (5) au moyen de la partie du secteur guidant plus court (7) et de la partie du secteur guidant plus long (8) et les deux secteurs guidant (7, 8) sont réciproquement parallèles et ils forment avec deux phalanges (4, 5) un parallélogramme mobile où le bout libre (9) du secteur guidant plus long (8) dépasse la phalange plus proche (5) et entre la phalange plus proche (5) et le secteur guidant plus court (7) il y a un élément (10) qui augmente le moment indispensable à la rotation du secteur (7) par rapport à la phalange plus proche (5) et à l'autre bout (11) de la phalange plus proche (5) on a monté le premier bout du second secteur à transmission (12) et dans la partie centrale de la phalange plus proche (5) se trouve le premier bout du second secteur à transmission lié à charnières (13) et l'autre bout du premier secteur à transmission (12) est lié de façon articulée à la partie centrale du second secteur à transmission (13) par le biais de la première barre (14) par contre le second bout du secteur à transmission (13) est lié de façon articulée au bout libre (9) du secteur guidant plus long (8) par le biais de la seconde barre (15).

2. Le grappin, selon la Revendication 1, **se caractérise par le fait que** la longueur de la phalange plus éloignée (4) est plus courte que la longueur de la phalange plus éloignée (5), qui dans sa partie centrale est équipée d'un dispositif de préhension (26).

3. Le grappin, selon la Revendication 1 ou 2, **se caractérise par le fait que** l'élément augmentant le moment indispensable à la rotation du secteur guidant plus court (7) par rapport à la phalange plus proche (5) est un ressort (10).

4. Le grappin, selon l'une des Revendications de 1 à 3, **se caractérise par le fait qu'**à côté opposé du doigt mobile (1) à la base (3) on a fixé un élément résistant par rapport au doigt (2).

5. Le grappin, selon l'une des Revendications de 1 à 4, **se caractérise par le fait que,** l'unité à transmission linéaire du doigt mobile (1) crée la barre troisième (24) liée de manière articulée par son premier bout avec la partie centrale du premier secteur à transmission (12) et le second bout de cette barre (24) est lié au servomoteur linéaire (18, 20).

6. Le grappin, selon la Revendication 4, **se caractérise par le fait que,** le servomoteur linéaire est une vis de traction (18) avec un écrou (20) auquel on a monté le second bout de la troisième barre (24).

7. Le grappin, selon la Revendication 5 lub 4, **se caractérise par le fait qu'**il se compose de deux doigts mobiles (1, 1'), tandis que l'élément de doigt qui résiste (2) est placé à côté opposé de deux doigts (1, 1'), fixé à charnières sur la base (3) et mis en marche au moyen d'un servomoteur linéaire (18, 20).

8. Le grappin, selon la Revendication 7, **se caractérise par le fait que,** les servomoteurs linéaires de deux doigts mobiles (1, 1') et un élément de doigt qui résiste (2) ce sont des vis de traction (18) avec des écrous (20) et les deux vis de traction (18) sont équipées d'une roue dentée (19) qui travaille avec une roue dentée séparée (23) du différentiel à l'essieu (16) dont la transmission est à moteur électrique (17).
